# EUROPEAN PATENT APPLICATION

(11) **EP 4 670 671 A1**
(43) Date of publication of application: **31.12.2025**
(21) Application number: 24184727.6
(22) Date of filing: 26.06.2024
(51) Int. Cl.: A61C 17/34, A61C 17/22, A61C 17/26

(54) **AN ELECTRIC ORAL CLEANING DEVICE HAVING OPERATING MODES AND A METHOD FOR SWITCHING BETWEEN OPERATING MODES**

(71) Applicant: Koninklijke Philips N.V., 5656 AG Eindhoven (NL)
(72) Inventor: DEBETS, René Jozef Willem, 5656 AG Eindhoven (NL); JANSEN, Johannes Antonius, 5656 AG Eindhoven (NL); NIESSEN, Eduard Matheus Johannes, 5656 AG Eindhoven (NL)
(74) Representative: Philips Intellectual Property & Standards

(57) **Abstract**

In order to allow an electric oral cleaning device comprising a limited set of control device and a display to transition between operation modes, the power on-off control device, in the active state of the electric oral cleaning device, changes functionality from a basic on-off control device to an operation mode control device when actuated within a time period after actuation of the device. If the power on-off control device is actuated after this time period the original on-off functionality is retained. This allows to achieve normal on-off control, operation mode control, and menu control in an intuitive way for the user by retaining the expected functionality of the control device and using the power on-off control device to control the basic on- and off-state, as well as the operation modes within the on-state.

## Description

### FIELD OF THE INVENTION

This invention relates to an electric oral cleaning device comprising:
- a main housing accommodating an electric motor;
- a oral cleaning tool supported by the main housing and having at least one movable oral cleaning element;
- a user-actuatable power on-off control device having a first functionality of, upon actuation in an inactive state of the motor, causing the motor to transition from the inactive state to an active state for driving the oral cleaning element and, upon actuation in the active state, causing the motor to transition from the active state to the inactive state, wherein the active state comprises at least two different operation modes of the motor;
- an information display having, in the inactive state of the motor, at least two different first display modes of displaying a respective information type from a first set of different information types, and having, in the active state of the motor, at least two different second display modes of displaying a respective information type from a second set of different information types, said second display modes including a motor operation display mode;
- a user-actuatable menu input device having a functionality of, upon actuation in, respectively, the inactive state and the active state of the motor, causing the information display to transition from one to another one of, respectively, the first display modes and the second display modes.

### BACKGROUND OF THE INVENTION

Such an electric oral cleaning device is known from US10743972.

The electric oral cleaning device of US 10743972 has several operation modes in which a drive unit is operable in different modes, wherein for example the brush speed or oscillation frequency may be varied to increase oral cleaning efficiency in a fast mode or highspeed mode, whereas power consumption may be reduced in a slow mode or low speed mode. Depending on the fittings of the electric oral cleaning device, other operation modes may be provided.

In order to allow the user to switch between operation modes, the electric oral cleaning device of US10743972 is provided with additional control devices besides the power on-off control device typically found on every electric oral cleaning device. The mode input device used in US10743972 is a touch button, a toggle switch or a gesture sensor to allow the user to input a respective mode command, switching the drive unit and/or a control unit into the desired mode. The electric oral cleaning device has an information display device for displaying information about such operation mode so as to give the user feedback which operation mode has been selected using the mode input device.

US 10743972 uses the mode input device for switching between the operation modes of the motor of the electric oral cleaning device while the electric oral cleaning device is on. When the motor is off the mode input device could be used for causing the information display to display information types from a first set of different information types when the electric oral cleaning device is off.

This has the disadvantage that, in the active mode, actuation of the mode input device causes switching between the operation modes of the oral cleaning device thus inhibiting the navigation through information types to be displayed by a second set of different information types via the same button as used for this purpose in the inactive state to navigate through the first set of electric hair-cutting device information.

It is an objective underlying the present invention to provide an improved control of the electric oral cleaning device avoiding the disadvantage of the prior art.

### SUMMARY OF THE INVENTION

In order to overcome this disadvantage the power on-off control device is configured to use only two input elements and a display and to have, in the active state of the motor and in the motor operation display mode of the information display, a second functionality of, upon actuation of the power on-off control device, causing the motor to transition from one to another one of the different operation modes, wherein said second functionality is maintained, instead of the first functionality, during a first predetermined period after causing the information display to transition to the motor operation display mode by actuation of the menu input device.

So instead of transitioning the motor of the electric oral cleaning device from the inactive state to the active state respectively from the active state to the inactive state, the actuation of the power on-off control button temporarily functions as an motor operation mode selector, thus avoiding confusing the user by a change of function of the menu input device. The menu input device can retain the same expected function of menu navigation in the active state as in the inactive state of the motor. So, an actuation of the menu input device causes the information display to display the respective set of different information types when in the inactive state respectively active state and subsequent actuation of the menu input device allows navigation through respectively selection of information types of the respective sets of different information types.

When the menu device is actuated while the motor is in the active state and subsequently the power on-off control device is actuated, a transition to another operation mode of the electric oral cleaning device is caused. This way the selection of motor operation modes within the active state is controlled by the same control, device that controls the transition between the inactive and the active state of the motor, while the menu input device retains a consistent functionality in both the inactive mode and the active mode of the motor.

In an embodiment the power on-off control device is configured to transition, upon expiration of the first predetermined period, from having the second functionality to having the first functionality.

At the expiration of the predetermined period the change of the functionality of the power on-off control device is undone and the functionality thus reverts to the control of the transition of the motor from the inactive state to the active state respectively from the active state to the inactive state. This allows the user to switch off motor after changing the operation mode with a single actuation of the power on-off control device.

In another embodiment a further actuation of the power on-off control device during the first predetermined period causes the second functionality to be maintained, instead of the first functionality, during a second predetermined period after said further actuation of the power on-off control device.

An actuation of the power on-off control device within the predetermined time causes not only a transition into another operation mode of the motor but also causes the second functionality of the power on-off control device to be maintained for a second predetermined period thus effectively extending the first predetermined time. This way the user has some time to decide whether the operation mode he switched to is the desired operation mode or whether he wants to, with a further actuation of the power on-off control device, have the motor transition to the next motor operation mode. This avoids the user having to press the menu control device to change the functionality of the power on-off control device more than once to reach the desired operation mode.

In a further embodiment the second predetermined period is equal to the first predetermined period.

The second predetermined period being equal to the first predetermined period ensures a consistent response by the electric oral cleaning device during operation.

In yet another embodiment the power on-off control device and the menu input device are actuatable by means of, respectively, a first push button and a second push button. Having two push buttons and an information display allow the user to intuitively control the electric oral cleaning device.

In an embodiment the operation modes of the motor include different motor speeds.

Having different motor speeds allows the adjustment of the operation to the required oral cleaning type and additionally provides aural feedback to the user indicating the current motor operation mode respectively the change in sound indicating a change of operation modes.

In an embodiment the first set of different information types includes at least one of the following:
- information about a charging state of a battery of the electric oral cleaning device;
- information about an operation mode of the motor during a previous active state of the motor;
- information about pressure exerted by the user during the previous active state of the motor;
- information about motion of the electric oral cleaning device relative to the user during the previous active state of the motor;
- information about a required cleaning of the electric oral cleaning device; and
- information about a state of connectivity between the electric oral cleaning device and an external device.

In the inactive state the electric oral cleaning device benefits from displaying this type of information which is of interest to the user when he is not cleaning his teeth, i.e. when the motor is in the inactive state.

In an embodiment the electric oral cleaning device in the motor operation display mode, the information display displays the operation mode in which the motor is actually operating, and wherein the second set of different types includes at least one of the following:
- information about a charging state of a battery of the electric oral cleaning device;
- information about a time during which the motor is in the active state since a last actuation of the power on-off control device;
- information about pressure exerted by the user;
- information about motion of the electric oral cleaning device relative to the user.

The information types of the second set of different information types are of interest to the user using the electric oral cleaning device while the motor is in the active state. For instance, the charge information is needed to allow the user to judge whether he can safely complete the current oral cleaning run.

The operation mode information is needed to remind the user which mode he is currently in to allow him to take a decision as to whether to change the operation mode or not. The sensitivity of the teeth of the user might have changed in sensitivity since the previous oral cleaning run and thus the user might only become aware of a need to change the motor operation mode. Displaying the motor operation mode in the motor the motor operation display mode helps the user navigate to the desired motor operation mode.

In a further embodiment the oral cleaning tool is detachably coupled to the main housing;
- the oral cleaning device comprises a detection system configured to detect which of the oral cleaning tool is actually coupled to the main housing and to provide a corresponding output.

A computer-implemented method for controlling an electric oral cleaning device, wherein the oral cleaning device comprises:
- a main housing accommodating an electric motor;
- a oral cleaning tool supported by the main housing and having at least one movable oral cleaning element;
- a user-actuatable power on-off control device having a first functionality of, upon actuation in an inactive state of the motor, causing the motor to transition from the inactive state to an active state for driving the oral cleaning element and, upon actuation in the active state, causing the motor to transition from the active state to the inactive state, wherein the active state comprises at least two different operation modes of the motor;

- an information display having, in the inactive state of the motor, at least two different first display modes of displaying a respective information type from a first set of different information types, and having, in the active state of the motor, at least two different second display modes of displaying a respective information type from a second set of different information types, said second display modes including a motor operation display mode; and
- a user-actuatable menu input device having a functionality of, upon actuation in, respectively, the inactive state and the active state of the motor, causing the information display to transition from one to another one of, respectively, the first display modes and the second display modes;
wherein the method comprises, in the active state of the motor and in the motor operation display mode of the information display:
- causing the power on-off control device to have a second functionality of, upon actuation of the power on-off control device, causing the motor to transition from one to another one of the different operation modes; and
- maintaining said second functionality, instead of the first functionality, during a first predetermined period after causing the information display to transition to the motor operation display mode by actuation of the menu input device.

As explained above this temporary change of functionality of the power on-off control device when actuated within a time window after the actuation of the menu control device while the motor is in the active mode allows the transitioning between operation modes in an intuitive way.

An embodiment of the method comprises the step of:
causing the power on-off control device to transition, upon expiration of the first predetermined period, from having the second functionality to having the first functionality.

At the expiration of the predetermined period the change of the functionality of the power on-off control device is undone and the functionality thus reverts to the control of the transition of the motor from the inactive state to the active state respectively from the active state to the inactive state. This allows the user to switch off the motor of the electric oral cleaning device after changing the operation mode with a single actuation of the power on-off control device.

In another embodiment of the method the method comprises the step of
causing the second functionality of the power on-off control device, upon a further actuation of the power on-off control device during the first predetermined period, to be maintained, instead of the first functionality, during a second predetermined period after said further actuation of the power on-off control device.

An actuation of the power on-off control device within the predetermined time causes effectively the extension of the predetermined time and consequently the functionality of the power on-off control device remains changed to causing a transition of the motor between motor operation modes within the active state. This way the user has some time to decide whether the operation mode he switched to is the desired operation mode or whether he wants to, with another actuation of the power on-off control device, have the motor transition to the next operation mode. This avoids the user having to press the menu control device to change the functionality of the power on-off control device more than once to reach the desired operation mode.

In another embodiment of the method, the second predetermined period is equal to the first predetermined period.

The second predetermined period being equal to the first predetermined period ensures a consistent response by the electric oral cleaning device during operation.

### BRIEF DESCRIPTION OF THE DRAWINGS

Fig. 1 shows an electric oral cleaning device with the control and information display devices of the invention.
Fig. 2 shows a prior art user interface for an electric oral cleaning device having a power on-off control button, a menu control button and an information display.
Fig. 3 shows another prior art user interface for an electric oral cleaning device having a power on-off control button, a menu control button and an information display.
Fig. 4 shows a user interface where the functionality of the power on-off control device is temporarily changed using the menu control device.
Fig. 5 shows a user interface where the functionality of the power on-off control is temporarily changed using a long press of the power on-off control to select operation modes.
Fig. 6 shows the structure of a controller for the electric oral cleaning device.

### DETAILED DESCRIPTION OF THE EMBODIMENTS

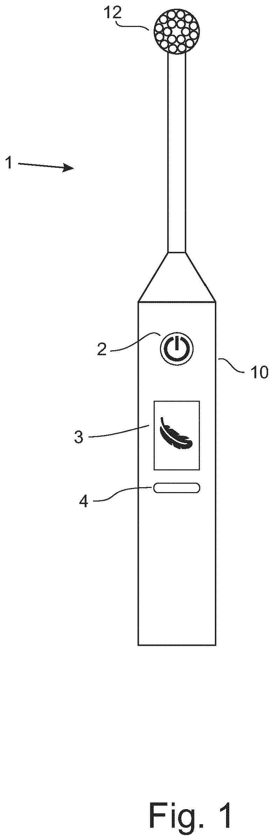

Fig. 1 shows an electric oral cleaning device with the control and information display devices of the invention.

As electric oral cleaning devices are held by the user there is little room on the handle 10 for control devices such as a power on-off control device 2 or a menu input device 4, nor for an information display 3. As such there is a general interest in minimizing the number of control devices and to restrict the size of the information display used.

Besides the basic power on-off control, the electric oral cleaning device can different operation modes. For instance, the electric oral cleaning device 1 can have several operational modes in which the speed of the motor of the drive unit that drives the brush 12 differs between modes, or can have a cleaning mode that differs from the regular oral cleaning modes. In addition to the operation modes, the electric oral cleaning device also has an information display 3 to display electric oral cleaning device information relating to the general state of the electric oral cleaning device 1, such as battery charge level, battery charge progress, connectivity settings and status, and wear information. This type of information is valid both in the active and the inactive state of the electric oral cleaning device. In the active state of the electric oral cleaning device the information display 3 can display information that is only related to the active state such as current operational mode, oral cleaning duration, applied pressure etc.

The electric oral cleaning device 1 comprises a motor and the operation modes are typically related to the operation of the motor but can also relate to providing feedback as to the dental condition etcetera while oral cleaning.

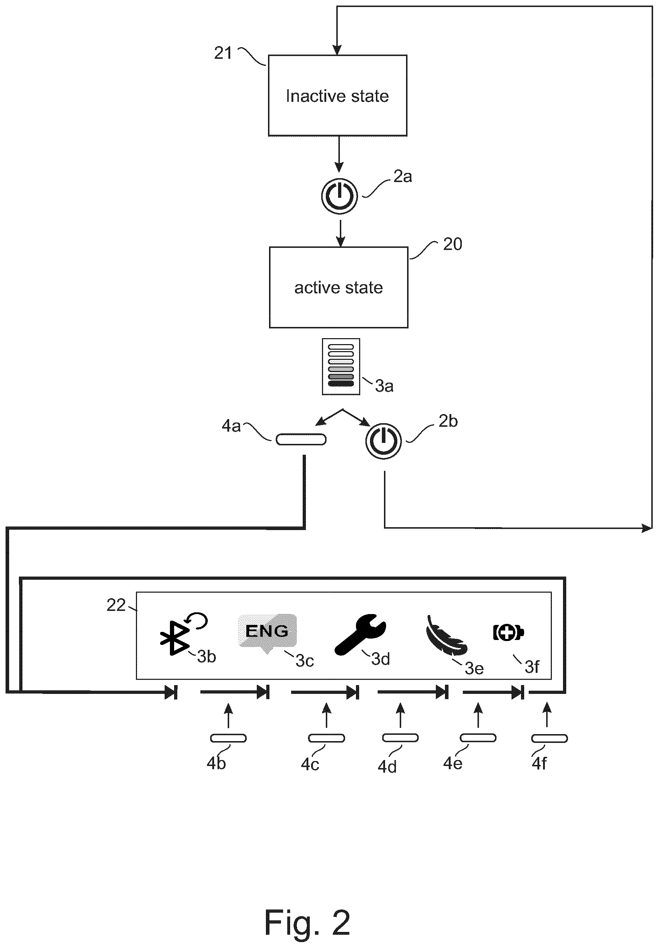

Fig. 2 shows a prior art user interface for an electric oral cleaning device having a power on-off control button, a menu control button and an information display.

A prior art motor of an electric oral cleaning device has two states: an inactive state 21 and an active state 20. A first actuation 2a of the power on-off control device transitions the motor from the inactive state 21 to the active state 20 and typically causes the information display to display a first information type 3a for instance indicating the remaining battery charge. A subsequent actuation 2b of the power on-off control device transitions the motor from the active state 20 to the inactive state 21.

The electric oral cleaning device also has, as explained in Fig. 1, a menu control device and an information display. A first actuation 4a of the menu control device while the motor is in the active state 20 causes the information display to display a second information type 3b of a first set 22 of different information types. By subsequently actuations 4b, 4c, 4d, 4e, 4f of the menu control device a third, fourth, fifth and sixth information types 3b, 3c, 3d, 3e, 3f of the first set 22 of different information types are subsequently shown. This allows the user of the electric oral cleaning device to inspect and change settings and also change the operation modes of the motor, in the example shown by the fifth and sixth actuation 4d, 4e, 4f which causes the operation mode of the motor to transition from the regular mode to a sensitive mode as indicated by the fifth information type 3e and subsequently to a battery saving mode 3f as indicated by the sixth information type 3f. When reaching the final information type 3f a subsequent actuation 4f causes a return to the beginning of the first set 22 of different information types and in the example of Fig. 2 causes a transition of the motor operation mode to the default operation mode by exiting the battery saving mode 3f.

The power on-off control device and menu control device thus have different functionality, the power on-off control device only affecting the inactive/active state of the motor of the electric oral cleaning device and the menu control device only affecting the displaying of different information types 3a, 3b, 3c, 3d, 3e, 3f on the information display and switching the operation mode of the motor where applicable.

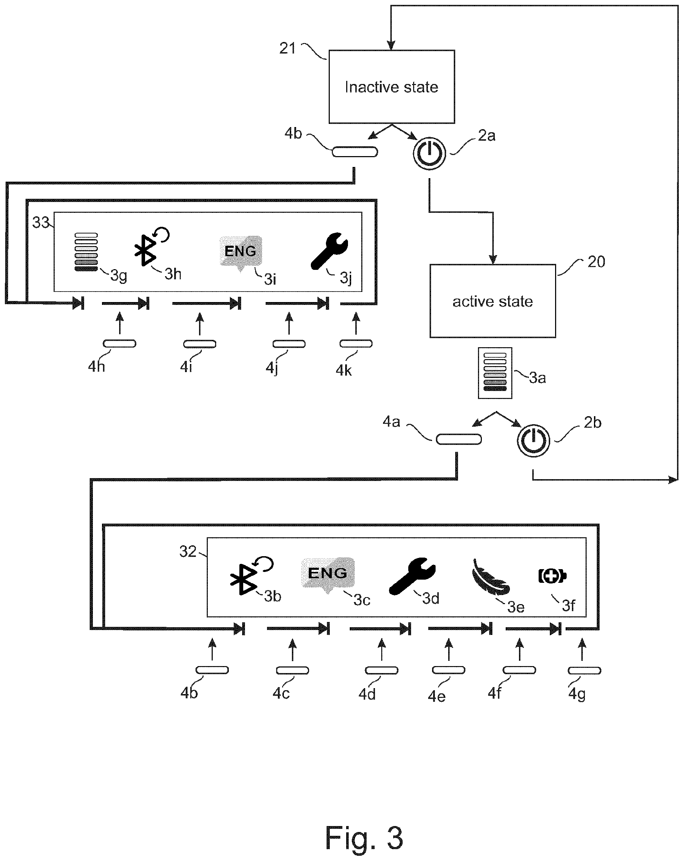

To be noted: in Figs. 3, 4 and 5 the operation modes are indicated using respective icons that can optionally be displayed when entering the respective operation modes. As such Figs. 3, 4 and 5 will use the same reference numerals when referring to the operation modes and the corresponding icons. As such the feather icon 3e represents a sensitive teeth cleaning mode that is easier on the gums than the default cleaning mode. The battery icon 3f represents a power save mode in which the motor is operated in a power saving mode to extend battery life for instance for when using the toothbrush on vacation while traveling without a charger. These are however just examples and other/different modes can be controlled via a menu.

Fig. 3 shows another prior art user interface for an electric oral cleaning device having a power on-off control button, a menu control button and information display.

When actuation 2a of the power on-off control device caused the electric oral cleaning device to be in the active state 20, actuation 4b, 4c, 4d, 4e, 4f, 4g of the menu control device causes the information display to display information types 3b, 3c, 3d, 3e, 3f belonging to a second set 32 of different information types The actuation 2b of the power on-off control device causes the electric oral cleaning device to be in the inactive state 21, where actuations 4h, 4i, 4j, 4k of the menu control device causes the information display to display information types belonging to a first set of different information types 33 which is related to the inactive state 21 of the motor. The actuation 4e, 4f, 4g of the menu control device while the motor is in the active state 20 transitions the motor between operational modes that exist within the active state 20. This however conflicts with the control of the displaying of the menu with electric oral cleaning device information types 3b, 3c, 3d that are not related to the motor operation modes as the user has to step through these non-motor mode control information types 3b, 3c, 3d either before reaching the motor mode control information types 3e, 3f. This mix of information types is unlogical and cumbersome. Even when the second set 32 is limited to only the motor mode control information types 3e, 3f, this difference between the functionality of the menu control element in the active state 20 and the inactive state 21 is confusing to the user.

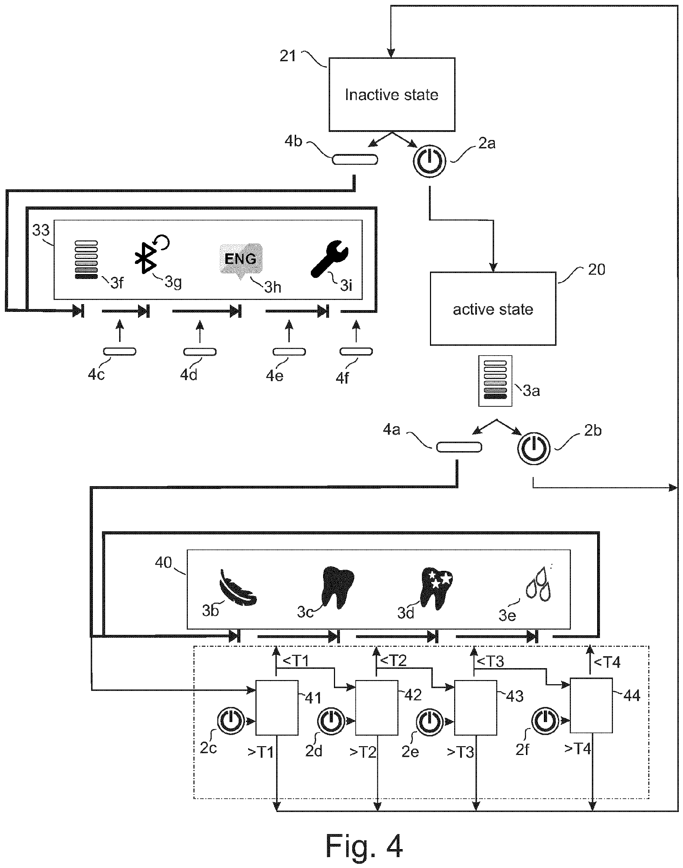

Fig. 4 shows a basic user interface where the functionality of the power on-off control device is temporarily changed using the menu control device.

In Fig. 4, when starting in the inactive state 21, actuation 2a of the power on-off control device causes the motor of the electric oral cleaning device to transition from the inactive state 21 to the active state 20 and the motor starts driving the brush(s). Optionally a general information type 3a is displayed, for instance indicating the remaining battery charge.

Actuation 2b of the power on-off control device in the active state 21, without the prior actuation 4a of the menu control device, causes the motor of the electric oral cleaning device to return to the inactive state 20.

Actuation 4a of the menu control device in the active state 20 of the motor causes the electric oral cleaning device to start displaying, in a second display mode, a first information type 3b from the second set of different information types 40 related to the active state 20 of the motor, the information type being a motor operation mode information 3b. In the example of Fig. 4 this first type 3b of information indicates a general operation mode. The first information type 3b can advantageously be the default operation mode of the motor or the current operation mode of the motor or the operation mode of the motor during the previous transition from the active state 20 to the inactive state 21 of the motor of the electric oral cleaning device.

Actuation 4a of the menu control device also starts a first timer 41 and the controller of the electric oral cleaning device checks, upon an actuation 2c of the power on-off control device, whether the first timer 41 expired or not.

In case the timer 41 expired before the actuation 2c of the power on-off control device, the power on-off control device retains its basic functionality of transitioning the motor of the electric oral cleaning device between the active state 20 and the inactive state 21. This can advantageously be indicated by displaying a general information type such as the remaining battery charge instead of the current operation mode 3b, 3c, 3d, 3e. The user can thus perform actuation 2c, of the power on-off control device to stop the motor of the electric oral cleaning device as expected as a use of the electric oral cleaning device will take some time and the timer 41 will have expired by the time the user finished oral cleaning and performs actuation 2c. The normal functionality of the power on-off control device is thus retained under normal use of the electric oral cleaning device also when the user performed the actuation 4a of the menu control device in order to view the current operation mode of the motor or to change the operation mode of the motor. Displaying the general information type upon return of the functionality of the power on-off control device helps to ensure that the current functionality of the power on-off control device is clear.

In case the timer 41 did not expire before the actuation 2c of the power on-off control device, the functionality of the power on-off control device is changed into an operation mode control, i.e. actuation 2c of the power on-off control device no longer causes the motor of the electric oral cleaning device to transition between the active state 20 and inactive state 21 but causes the motor to transition between the first motor operation mode 3b and the second motor operation mode 3c , within the active state 20. The first motor operation mode 3b is for example a sensitive cleaning operation mode and the second motor operation mode 3c is for example a standard cleaning operation mode, intended for daily use. The associated information type can be displayed on the display to aid the user in determining what motor operation mode is the current one. Actuation 2c of the power on-off control device can also start a second timer 42 having a second timer duration, or extend the duration of the first timer 41 to an extended duration. For discussion purposes a second timer 42 is shown. This equally applies to further timer instances 43, 44, these can be independent timers with their independent predetermined time as a limit or can be separate timers all using the same predetermined time, or can be a single timer which gets restarted upon any of the actuations 2c, 2d, 2e, 2f of the power on-off control device. In case the second timer 42 did not expire before the actuation 2d of the power on-off control device, the power on-off control device retains its second functionality, the operation mode control functionality, i.e. actuation 2d of the power on-off control device causes the operation mode of the motor to transition between the second motor operation mode 3c and the third motor operation mode 3d, within the active state 20. The third operation mode 3d is for instance an teeth whitening operation mode.

In case the second timer 42 expired before the actuation 2d of the power on-off control device, the functionality of the power on-off control device is changed to the first functionality of transitioning the motor of the electric oral cleaning device between the active state 20 and the inactive state 21. Actuation 2d in turn starts the third timer 43 and the successive actuation 2e of the power on-off control device, if the third timer 43 did not expire before actuation 2e, causes the motor of the electric oral cleaning device to transition from the third operation mode 3e, to a fourth operation mode 3e, such as a brush cleaning operation mode 3e for intensive cleaning of the brush using water. Actuation 2e starts the fourth timer 44. When the last operation mode 3e is reached by successive actuations 2c, 2d, 2e of the power on-off control device, the next actuation 2f will cause the motor of the electric oral cleaning device to transition back to the first operation mode 3d, the default mode, in case the fourth timer 44 did not expire before the actuation 2f, otherwise the actuation 2f will return the motor to the inactive state 21. This creates a circular set of motor operation modes 40. Using a circular set of motor operation modes 40 allows a large number of operation modes to be included in the second set 40 of different information types 3b, 3c, 3d, 3e and allows easy expansion if needed. With each operation mode 3b, 3c, 3d, 3e, the information display can display a corresponding icon 3b, 3c, 3d, 3e to remind the user of the current motor operation mode 3b, 3c, 3d, 3e. This set of icons 3b, 3c, 3d, 3e indicating the motor operation modes to the user thus form the information types of the second set 40 of different information types that are related to the operation modes of the active state 20 of the motor.

Instead of, or in addition to, displaying the second set 40 of different information types the electric oral cleaning device can also provide an audible indication of the current operation mode, respectively of a transition between operation modes by changing the RPM (revolutions per minute) of the motor of the drive unit or by causing variations in time of the RPM of the motor or using the motor to provide haptic feedback to the user.

Each transition between operation modes 3b, 3c, 3d, 3e, caused by the actuation 2c, 2d, 2e, 2f, of the power on-off control device advantageously causes extension of the second functionality of the power on-off control device. When a successive actuation 2c, 2d, 2e, 2f of the power on-off control device occurs after the expiry of the predetermined times as checked by the first, second, third and fourth timer 41, 42, 43, 44, the functionality of the power on-off control device returns to the first functionality, the basic on-off control functionality and the electric oral cleaning device is caused to transition to the inactive state 21 by these actuations. Actuations 2c, 2d, 2e, 2f of the power on-off control device before expiry of the respective timers 41, 42, 43, 44 causes the second functionality to be changed to respectively to be maintained, instead of the first functionality, during the respective predetermined periods after said further actuation 2c, 2d, 2e, 2f of the power on-off control device. This allows the user to navigate through the operation modes 3b, 3c, 3d, 3e, of the motor with a minimum number of actuations of the power on-off control device.

Actuations 2c, 2d, 2e, 2f of the power on-off control device after expiry of the respective timers 41, 42, 44, 45 causes the functionality of the power on-off control device to revert to the first functionality whichensure that the operation of the device feels intuitive to the user.

When the motor of the electric oral cleaning device is in the inactive state 21, the menu control button can optionally function as described in Fig. 3, i.e. cause the information display of the electric oral cleaning device to start displaying the first information types of the first set 33 of different information types and successive actuations 4c, 4d, 4e, 4f of the menu control device allow the user to navigate through the displayed information as expected. In the inactive state, the functionality of the power on-off control device can be limited to causing the motor of the electric oral cleaning device to transition into the active state 20, leading to predictability for the user.

As such, this allow the electric oral cleaning device to retain the expected functionality while at the same time allowing the transitioning between motor operation modes 3b, 3c, 3d, 3e with the same control device, the power on-off control device, that is also used for transitioning between what the user experiences as basic motor operation modes: the on-state/ active state 20 and the off-state/ inactive state 21, thus properly separating the functionality of the power on-off control device and the menu control device.

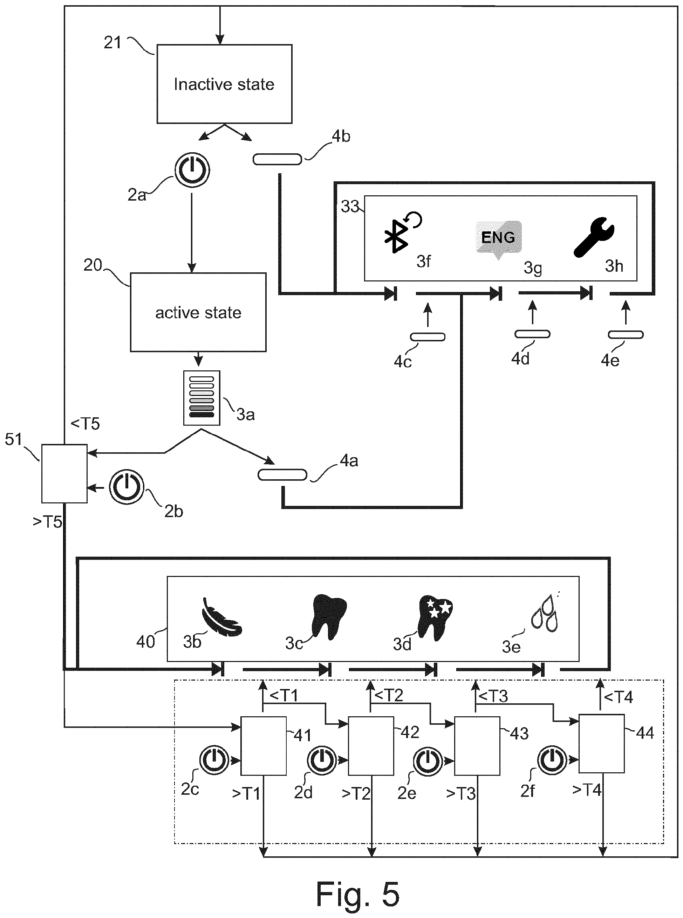

Fig. 5 shows a user interface where the power on-off control is temporarily changed using a long press of the power on-off control.

The operation of the electric oral cleaning device in Fig. 5 is similar to Fig. 4 and only the differences will be discussed.

When the motor of the electric oral cleaning device is in the active state 20, the actuation 2b of the power on-off control device will cause the functionality of the power on-off control device to change from power on-off control to operation mode control. In Fig. 4 this change is dependent on the previous actuation of the menu control device, while in Fig. 5 it is dependent on the duration of the actuation 2b of the power on-off control device. For this a long press timer 51 is started upon actuation 2b of the power on-off control device.

If the actuation 2b of the power on-off control device is still detected upon the expiry of the long press timer 51 (i.e. a long press is detected), the functionality of the power on-off control device will transition to the second functionality, i.e. the information display will display the current information type of the second set 40 associated with the current motor operation mode and further actuations 2c, 2d, 2e, 2f of the power on-off control device will cause the electric oral cleaning device to transition between the subsequent operation modes 3e, 3f, 3g, 3h as described in Fig. 4. As described in Fig. 4 the use of the timers 41, 42, 43, 44 adds the advantage that after expiry the functionality of the power on-off control device returns to the first functionality which means that an actuation leads to the transition of the motor to the inactive state 21 without the need for extra presses or long presses. Also here timers 41, 42, 43, 44 can be independent timers with their respective predetermined time as a limit or can be separate timers all using the same predetermined time, or can be a single timer with a predetermined time which gets restarted upon any of the actuations 2c, 2d, 2e, 2f of the power on-off control device.

If the actuation 2c of the power on-off control device ends before the expiry of the long press timer 51, the first functionality of the power on-off control device is retained and the electric oral cleaning device will transition to the inactive state 21. A short actuation 2c of the power on-off control device thus causes the electric oral cleaning device to behave as expected by the user.

Optionally, a long actuation (long press) of the power on-off control device while the electric oral cleaning device is displaying the first set 33 of information types in the active mode 21 can cause the functionality of the power on-off control device to temporarily transition to the second functionality of controlling the operation modes of the motor of the electric oral cleaning device.

It is to be noted that optionally the actuation 4a, 4b of the menu control device can bring up the same first set of information types 33 regardless of whether the motor is in the active state 20 or the inactive state 21.

It is further to be noted that everywhere in the description a motor operation mode, when transitioned to, can be indicated by text or an icon on the information display, as well as through haptic feedback or optical signaling such a color changes or brightness changes of an indicator light.

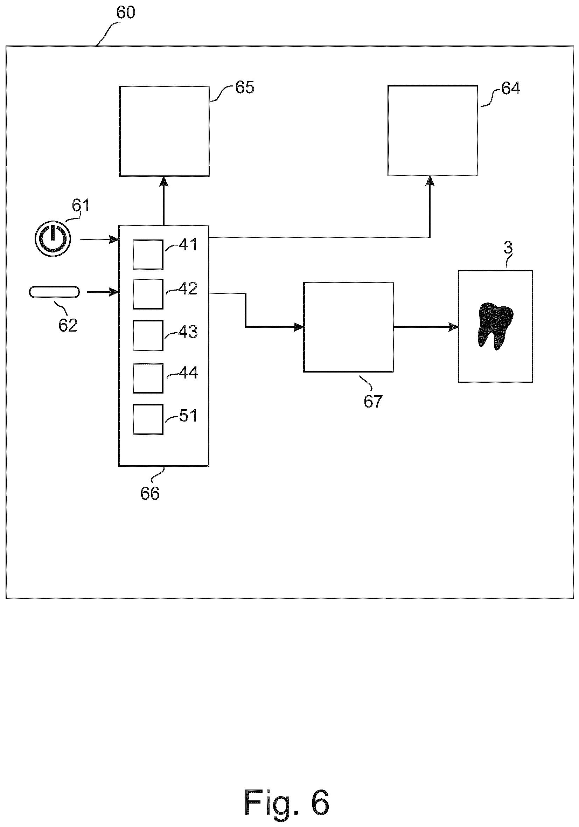

Fig. 6 shows the devices of the electric oral cleaning device.

The electric oral cleaning device 1 comprises a controller 60 which can be a dedicated electronic circuit comprising an electric oral cleaning device power controller 65, a decision logic 66, and a menu controller 67 and an operation mode controller 64. As these blocks can also implemented in software a general-purpose microcomputer circuit can also be used as controller 60.

The controller 60 is coupled to the power on-off control device 61, the menu control device 62, the information display 63 and the driver circuit of which the operation modes have to be controlled.

The actuation signal from the power on-off control device 61 and the menu control device are both received by the decision logic 66. The decision logic 66 further comprises the timers 41, 42, 43, 44 when implementing the embodiment of Fig. 4, respectively also the long press timer 51 when implementing the embodiment of Fig. 5, needed for determining the intended functionality of the power on-off control device 61 as explained in the Figs. 3, 4 and 5.

When the functionality is determined by the decision logic 66 to be the transitioning of the motor between the active and inactive states, the decision logic 66 will route the actuation signal from the power on-off control device 61 to the power controller 65 so that the power controller 65 can effect the transition of motor of the electric oral cleaning device 1 between the inactive and active states.

When the functionality is determined by the decision logic 66 to be the second functionality, i.e. transitioning between operation modes, the decision logic 66 will route the actuation signal from the power on-off control device 61 to the operation mode controller 64 so that the operation mode controller 64 can effect the transition of the motor of the electric oral cleaning device 1 between the operation modes within the active state.

The decision logic 66 will route the power on-off control device signal based on whether it received the actuation signal of the menu control device 62 and based on whether the first timer 41 respectively second timer 42, 43, 44 expired or not, as explained above in Fig. 4 and based on whether the long press timer 51 expired or not, as explained above in Fig. 5.

The decision logic can also route the actuation signal of the menu control device 62 to the menu controller 67 directly in order to cause the menu controller 67 to display the information types on the information display 63, but the menu controller alternatively can also receive the actuation signal of the menu control device 62 from the decision logic 66.

Lastly the decision logic 66 can also, based on the present functionality of the power on-off control device 61, cause the menu controller 67 to cause the information display 63 to display an information type that corresponds to the current operation mode.

## Claims

1. An electric oral cleaning device comprising:
- a main housing accommodating an electric motor;
- a oral cleaning tool supported by the main housing and having at least one movable oral cleaning element;
- a user-actuatable power on-off control device having a first functionality of, upon actuation in an inactive state of the motor, causing the motor to transition from the inactive state to an active state for driving the oral cleaning element and, upon actuation in the active state, causing the motor to transition from the active state to the inactive state, wherein the active state comprises at least two different operation modes of the motor;
- an information display having, in the inactive state of the motor, at least two different first display modes of displaying a respective information type from a first set of different information types, and having, in the active state of the motor, at least two different second display modes of displaying a respective information type from a second set of different information types, said second display modes including a motor operation display mode;
- a user-actuatable menu input device having a functionality of, upon actuation in, respectively, the inactive state and the active state of the motor, causing the information display to transition from one to another one of, respectively, the first display modes and the second display modes;
**characterized in that** the power on-off control device is configured to have, in the active state of the motor and in the motor operation display mode of the information display, a second functionality of, upon actuation of the power on-off control device, causing the motor to transition from one to another one of the different operation modes, wherein said second functionality is maintained, instead of the first functionality, during a first predetermined period after causing the information display to transition to the motor operation display mode by actuation of the menu input device.

2. The electric oral cleaning device as claimed in claim 1, wherein the power on-off control device is configured to transition, upon expiration of the first predetermined period, from having the second functionality to having the first functionality.

3. The electric oral cleaning device as claimed in claim 1 or 2, wherein a further actuation of the power on-off control device during the first predetermined period causes the second functionality to be maintained, instead of the first functionality, during a second predetermined period after said further actuation of the power on-off control device.

4. The electric oral cleaning device as claimed in claim 3, wherein the second predetermined period is equal to the first predetermined period.

5. The electric oral cleaning device as claimed in any of the preceding claims, wherein the power on-off control device and the menu input device are actuatable by means of, respectively, a first push button and a second push button.

6. The electric oral cleaning device as claimed in any of the preceding claims, wherein the operation modes of the motor include different motor speeds.

7. The electric oral cleaning device as claimed in any of the preceding claims, wherein the first set of different information types includes at least one of the following:
- information about a charging state of a battery of the electric oral cleaning device;
- information about an operation mode of the motor during a previous active state of the motor;
- information about a pressure exerted by the user during the previous active state of the motor;
- information about motion of the electric oral cleaning device relative to the user during the previous active state of the motor;
- information about a required cleaning of the electric oral cleaning device; and
- information about a state of connectivity between the electric oral cleaning device and an external device.

8. The electric oral cleaning device as claimed in any of the preceding claims, wherein, in the motor operation display mode, the information display displays the operation mode in which the motor is actually operating, and wherein the second set of different information types includes at least one of the following:
- information about a charging state of a battery of the electric oral cleaning device;
- information about a time during which the motor is in the active state since a last actuation of the power on-off control device;
- information about a pressure exerted by the user;
- information about motion of the electric oral cleaning device relative to the user.

9. The electric oral cleaning device as claimed in any of the preceding claims, wherein:
- the oral cleaning tool is detachably coupled to the main housing;
- the oral cleaning device comprises a detection system configured to detect which type of oral cleaning tool is actually coupled to the main housing and to provide a corresponding output;
- the menu input device is configured to receive the output from the detection system and, when the output corresponds to detection of the oral cleaning tool, to have a further functionality, in the active state of the motor, of causing a transition of the oral cleaning device from one to another one of different secondary operation modes.

10. A computer-implemented method for controlling an electric oral cleaning device, wherein the oral cleaning device comprises:
- a main housing accommodating an electric motor;
- a oral cleaning tool supported by the main housing and having at least one movable oral cleaning element;
- a user-actuatable power on-off control device having a first functionality of, upon actuation in an inactive state of the motor, causing the motor to transition from the inactive state to an active state for driving the oral cleaning element and, upon actuation in the active state, causing the motor to transition from the active state to the inactive state, wherein the active state comprises at least two different operation modes of the motor;
- an information display having, in the inactive state of the motor, at least two different first display modes of displaying a respective information type from a first set of different information types, and having, in the active state of the motor, at least two different second display modes of displaying a respective information type from a second set of different information types, said second display modes including a motor operation display mode; and
- a user-actuatable menu input device having a functionality of, upon actuation in, respectively, the inactive state and the active state of the motor, causing the information display to transition from one to another one of, respectively, the first display modes and the second display modes;
**characterized in that** the method comprises, in the active state of the motor and in the motor operation display mode of the information display:
- causing the power on-off control device to have a second functionality of, upon actuation of the power on-off control device, causing the motor to transition from one to another one of the different operation modes; and
- maintaining said second functionality, instead of the first functionality, during a first predetermined period after causing the information display to transition to the motor operation display mode by actuation of the menu input device.

11. The method as claimed in claim 10, further comprising the step of causing the power on-off control device to transition, upon expiration of the first predetermined period, from having the second functionality to having the first functionality.

12. The method as claimed in claim 10 or 11, further comprising causing the second functionality of the power on-off control device, upon a further actuation of the power on-off control device during the first predetermined period, to be maintained, instead of the first functionality, during a second predetermined period after said further actuation of the power on-off control device.

13. The method as claimed in claim 12, wherein the second predetermined period is equal to the first predetermined period.

14. A computer program product comprising a non-transitory computer-readable medium, the computer-readable medium having computer-readable code embodied therein, the computer readable code being configured such that, on execution by a suitable processor of an electric oral cleaning device, the processor is caused to perform the method as claimed in any of the claims 10-13.
